# FASCICULE DE BREVET EUROPEEN

(11) **EP 0 579 564 B1**
(45) Date de publication et mention de la délivrance du brevet: **22.01.1997**
(21) Numéro de dépôt: 93440052.4
(22) Date de dépôt: 05.07.1993
(51) Int. Cl.: A01B 73/06, A01D 34/66, A01D 67/00

(54) **Faucheuse destinée à être liée à un véhicule moteur et comportant un dispositif de dépose perfectionné**
Mit einem Schlepper zu verbindender Mäher mit einer verbesserten Abstellvorrichtung
Mower intended to be connected to a motor vehicle and comprising an improved settlement device

(30) Priorité: 07.07.1992 FR 9208656
(43) Date de publication de la demande: 19.01.1994
(73) Titulaire: KUHN S.A., F-67700 Saverne (FR)
(72) Inventeur: Wattron, Bernard, F-67700 Haegen (FR); Walch, Martin, F-67490 Dettwiller (FR)

(56) Documents cités:
- EP-A- 0 289 773
- DE-U- 1 738 047
- FR-A- 2 668 880
- GB-A- 1 452 308

## Description

La présente invention concerne une faucheuse comportant une structure d'attelage destinée à être liée rigidement à l'attelage d'un véhicule moteur et un corps lié dans le voisinage de l'une de ses deux extrémités longitudinales, à la structure d'attelage au moyen d'une articulation cylindrique d'axe géométrique dirigé vers le haut, ledit corps pouvant être pivoté par rapport à la structure d'attelage d'une position de travail dans laquelle son axe longitudinal s'étend transversalement à la direction de travail, dans une position de transport dans laquelle son axe longitudinal s'étend au moins sensiblement parallèlement à la direction de transport, ledit corps comportant :
- une liaison pivot agencée dans le voisinage de ladite articulation cylindrique et présentant un axe géométrique dirigé au moins sensiblement perpendiculairement à l'axe géométrique de ladite articulation cylindrique et au moins sensiblement perpendiculairement à l'axe longitudinal du corps,
et
- une roue implantée dans le voisinage de l'autre extrémité longitudinale du corps, par l'intermédiaire de laquelle le corps s'appuie sur le sol.

Il est connu dans l'état de la technique (FR-A-2 668 880) une faucheuse comportant les moyens décrits ci-dessus.

Avantageusement, sur ce type de faucheuse connue, le fait de pouvoir pivoter le corps autour de l'articulation cylindrique le liant à la structure d'attelage permet audit corps de présenter une largeur de travail importante, tout en offrant une largeur de transport réduite.

Par ailleurs, la liaison pivot qui est implantée dans le voisinage de ladite articulation cylindrique autorise une bonne adaptation du corps au relief du sol tant au travail qu'au transport.

Comme sur cette faucheuse connue, la structure d'attelage est liée à l'attelage trois points du véhicule moteur, ladite structure d'attelage est relativement compacte. Ceci permet aux roues du véhicule moteur de rouler de part et d'autre de l'andain précédemment déposé par ladite faucheuse sans que le passage de l'andain sous le véhicule moteur ne soit gêné par la structure d'attelage.

Par ailleurs, vu que le corps s'appuie sur une roue, l'attelage du tracteur n'est que faiblement sollicité.

Le but de la présente invention est de créer une faucheuse pouvant être aisément déposée, tout en conservant les avantages de cette faucheuse connue.

Dans un premier type de réalisation selon l'invention, la faucheuse est caractérisée par le fait :
- qu'elle comporte un dispositif de dépose lié soit à la structure d'attelage, soit entre ladite structure d'attelage et la liaison pivot du corps, et destiné à supporter une partie du poids de la faucheuse lors de la dépose ;
- que ledit dispositif de dépose s'appuie sur le sol en au moins deux points de contact s'étendant, en vue de dessus, de part et d'autre de l'axe géométrique de ladite liaison pivot ;
et
- que le dispositif de dépose comporte au moins une béquille pouvant occuper deux positions distinctes : une position de dépose dans laquelle elle est destinée à supporter une partie du poids de la faucheuse et une position escamotée dans laquelle elle ne gêne pas le passage du produit précédemment coupé sous ladite structure d'attelage.

Par ailleurs, dans un deuxième type de réalisation selon l'invention, la faucheuse est caractérisée par le fait :
- qu'elle comporte un dispositif de dépose lié soit à la structure d'attelage, soit entre ladite structure d'attelage et la liaison pivot du corps, et destiné à supporter une partie du poids de la faucheuse lors de la dépose ;
- que ladite faucheuse comporte en sus un verrou condamnant le pivotement de la structure d'attelage par rapport au corps autour de l'axe géométrique de ladite liaison pivot lorsque la faucheuse est déposée ;
et
- que le dispositif de dépose comporte une béquille pouvant occuper deux positions distinctes : une position de dépose dans laquelle elle est destinée à supporter une partie du poids de la faucheuse et une position escamotée dans laquelle elle ne gêne pas le passage du produit précédemment coupé sous ladite structure d'attelage.

L'agencement avantageux des points de contact ou bien l'utilisation d'un verrou, assure à la structure d'attelage, ainsi qu'à toute la faucheuse, une position de dépose particulièrement stable.

Vu que le dispositif de dépose est lié soit à la structure d'attelage, soit entre ladite structure d'attelage et ladite liaison pivot, son encombrement et son poids ne risquent pas de gêner l'adaptation du corps au relief du sol.

Du reste, grâce à l'utilisation d'au moins une béquille escamotable, le passage du produit précédemment coupé sous la structure d'attelage ne risque pas d'être gêné par ladite béquille.

Ce faisant, la faucheuse des deux types de réalisation selon l'invention peut s'appuyer sur le sol uniquement au moyen de la roue et du dispositif de dépose. Cependant, il va de soi que lors de la dépose, le corps de la faucheuse peut en sus s'appuyer directement sur le sol sans pour autant sortir du domaine de protection défini ci-dessus.

Dans le deuxième type de réalisation selon l'invention, il est prévu que la faucheuse comporte une seule roue et que le dispositif de dépose s'appuie sur le sol en au moins deux points.

De ce fait, dans le deuxième type de réalisation, il est avantageux que lesdits points de contact s'étendent, en vue de dessus, devant l'axe géométrique de ladite liaison pivot.

Selon une caractéristique supplémentaire de l'invention, il est prévu dans les deux types de réalisation, que les deux points de contact s'étendent respectivement de part et d'autre d'un plan médian contenant l'axe géométrique de ladite articulation cylindrique et dirigé au moins sensiblement parallèlement à la direction de transport de la faucheuse. Un tel agencement confère à la structure d'attelage de la faucheuse selon l'invention une meilleure stabilité latérale.

Afin de lier rigidement la structure d'attelage à l'attelage du véhicule moteur, la structure d'attelage comporte deux points d'attelage inférieurs destinés à être liés aux bras inférieurs du véhicule moteur et un point d'attelage supérieur destiné à être lié à la bielle d'attelage dudit véhicule moteur.

Par ailleurs, le dispositif de dépose comporte au moins un organe de mise en position amenant la (les) béquille(s) de sa (leur) position de dépose dans sa (leur) position escamotée et vice versa. Grâce à cet organe de mise en position, l'utilisateur peut mettre en place ou escamoter la (les) béquille(s) depuis la cabine du véhicule moteur.

La (les) béquille(s) est (sont) liée(s) soit à la structure d'attelage, soit entre ladite structure d'attelage et la liaison pivot du corps, au moyen d'une liaison cylindrique (respective). Ce faisant, le passage de la position de dépose à la position escamotée est réalisé en pivotant la (les) béquille(s) vers le haut.

Dans le premier type de réalisation selon l'invention, il est prévu que la faucheuse selon l'invention comporte deux béquilles et que l'axe géométrique de chaque liaison cylindrique soit dirigé au moins sensiblement parallèlement à la direction de transport de la faucheuse.

De plus, chaque béquille comporte deux points de contact qui s'étendent, en vue de dessus, respectivement de part et d'autre de l'axe géométrique de ladite liaison pivot lorsque le corps est déposé dans sa position de transport.

Les liaisons cylindriques, quant à elles, s'étendent lorsque le corps est dans sa position de transport, de manière au moins sensiblement symétrique de part et d'autre du plan médian qui contient l'axe géométrique de ladite articulation et qui est dirigé parallèlement à la direction de transport de la faucheuse.

En particulier, chaque liaison cylindrique est implantée juste derrière les trois points d'attelage de la structure d'attelage et de sorte que le prolongement de leur axe géométrique respectif comporte au moins sensiblement le point d'attelage inférieur correspondant de la structure d'attelage, lorsque le corps est dans sa position de transport.

Dans le deuxième type de réalisation selon l'invention, il est prévu que l'axe géométrique de la liaison cylindrique s'étende transversalement à la direction d'avance de la faucheuse.

Par ailleurs, dans ce deuxième type de réalisation selon l'invention, le corps comporte une tête d'attelage qui est liée d'une part à la structure d'attelage au moyen de ladite articulation cylindrique et qui est liée d'autre part au reste du corps à l'aide de ladite liaison pivot, alors que le verrou est implanté entre la tête d'attelage et le reste du corps.

A cet effet, le verrou peut comporter un fourreau articulé à la tête d'attelage et dans lequel est montée coulissante une tige articulée au reste du corps, le fourreau étant pourvu d'une ouverture le traversant radialement et destinée à recevoir une poignée servant à limiter le pivotement du reste du corps par rapport à la tête d'attelage.

Selon une autre caractéristique de l'invention, il est également prévu que le dispositif de dépose soit lié plus précisément à la structure d'attelage.

D'autre part, il est aussi prévu que la faucheuse selon l'invention puisse être déposée, de manière stable, lorsque le corps s'étend en vue de dessus dans sa position de travail.

Cette faucheuse pourra même être déposée de manière stable dans toutes les positions dans lesquelles le corps est susceptible d'être pivoté par rapport à la structure d'attelage autour de l'axe géométrique de l'articulation liant le corps à la structure d'attelage.

Pour ne solliciter que faiblement l'attelage du véhicule moteur quelle que soit la position du corps par rapport à la structure d'attelage, il est avantageux que le corps s'appuie sur le sol au moyen de ladite roue quelle que soit la position angulaire dans laquelle le corps est susceptible d'être pivoté autour de l'axe géométrique de ladite articulation cylindrique. Préférentiellement, le corps peut être pivoté par rapport à la structure d'attelage au moyen d'un organe de manoeuvre.

Des applications intéressantes peuvent être obtenues dans le domaine des faucheuses à "disques" avec ou sans organes de traitement du produit coupé.

D'autres caractéristiques de l'invention apparaissent dans la description suivante de deux exemples non limitatifs de réalisation selon l'invention faite en référence au dessin annexé sur lequel :
- la figure 1 représente une vue de dessus d'une faucheuse selon l'invention liée à un tracteur agricole et placée dans la position de travail ;
- la figure 2 représente, dans la position de travail de la figure 1, une coupe de la structure d'attelage ;
- la figure 3 représente une vue de dessus de la faucheuse placée dans la position de transport ;
- la figure 4 représente une vue latérale arrière de la faucheuse sans organes de protection, suivant la flèche IV définie sur la figure 1 ;
- la figure 5 représente une vue latérale de la faucheuse sans organes de protection, suivant la flèche V définie sur la figure 1 ;
- la figure 6 représente, en coupe, un organe de délestage et de levage dans sa position de travail ;
- la figure 7 représente, en coupe, l'organe de délestage et de levage de la figure 6 dans sa position de transport ;
- la figure 8 représente une coupe partielle de la partie avant de la faucheuse déposée dans sa position de transport ;
- la figure 9 représente une vue de dessus de la faucheuse déposée dans sa position de transport ;
- la figure 10 représente une vue de dessus de la faucheuse déposée dans sa position de travail ;
- la figure 11 représente une vue arrière des béquilles dans leur position de dépose, suivant la flèche XI définie sur la figure 8 ;
- la figure 12 représente en vue arrière les béquilles dans leur position escamotée ;
- la figure 13 représente un autre exemple de réalisation d'une faucheuse selon l'invention déposée dans sa position de transport ;
- la figure 14 représente une vue arrière de la béquille dans sa position de dépose, suivant la flèche XIV définie sur la figure 13 ;
et
- la figure 15 représente une coupe partielle de la partie avant de la faucheuse des figures 13 et 14, dans sa position de transport.

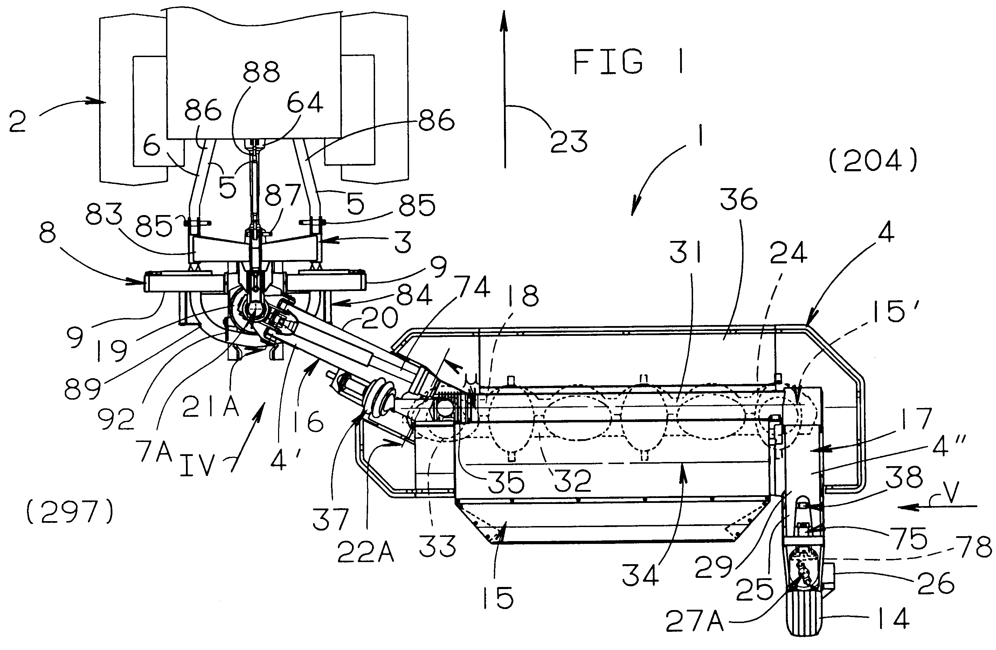

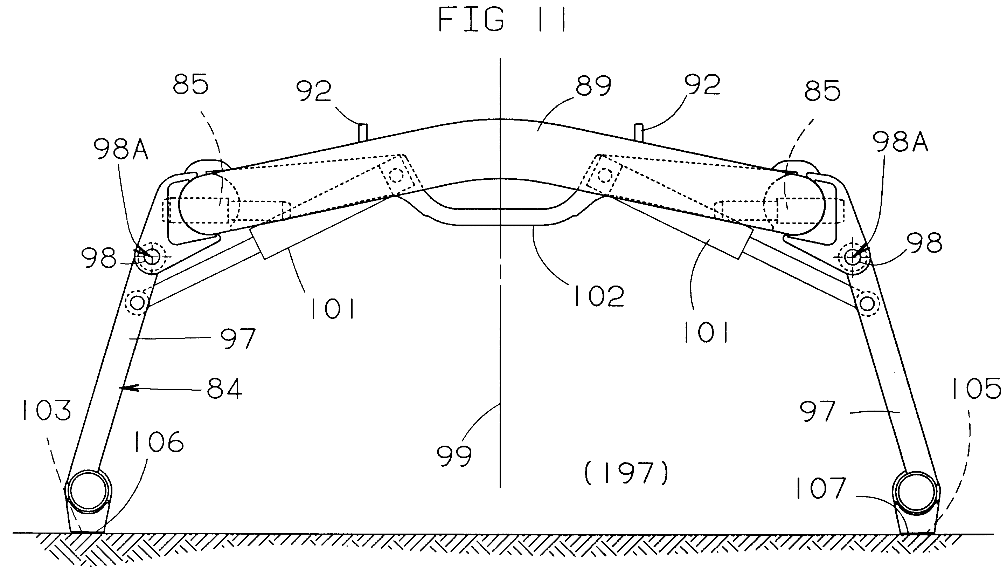

Les figures 1 à 12 représentent une faucheuse (1) selon l'invention. Celle-ci est attelée à un tracteur agricole (2).

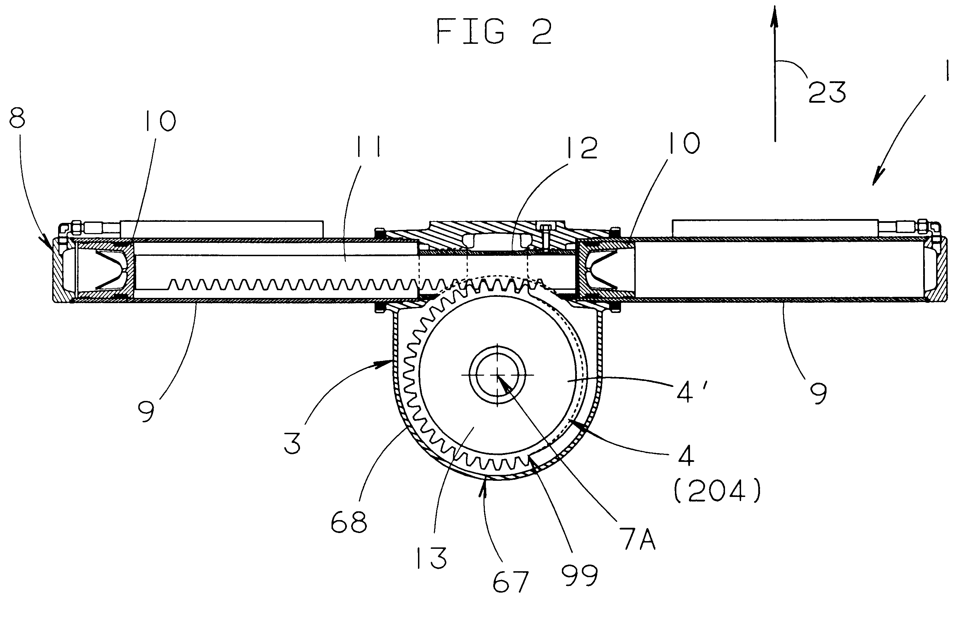

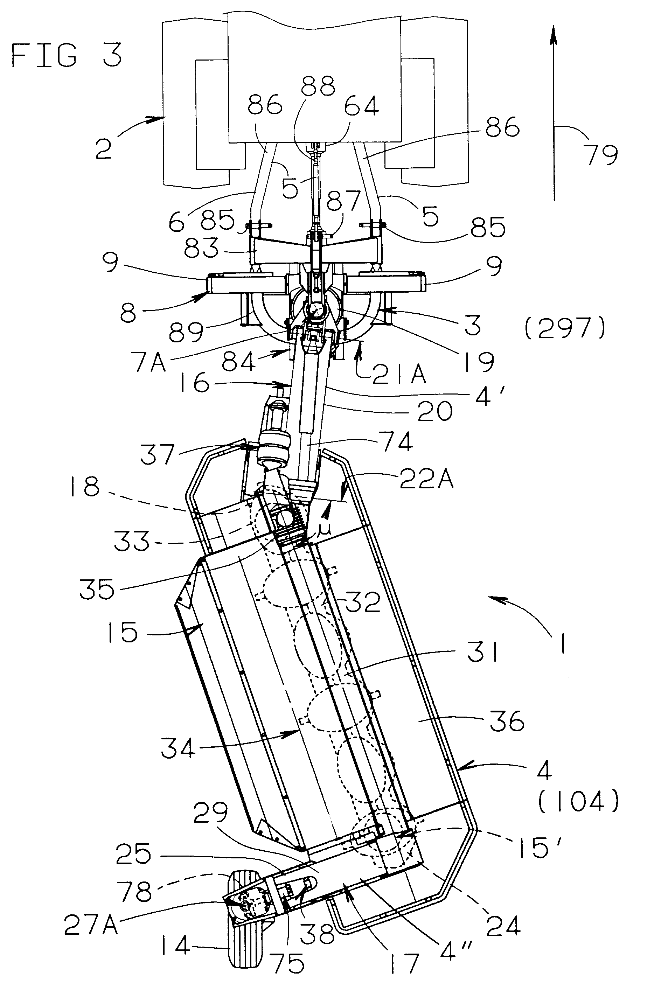

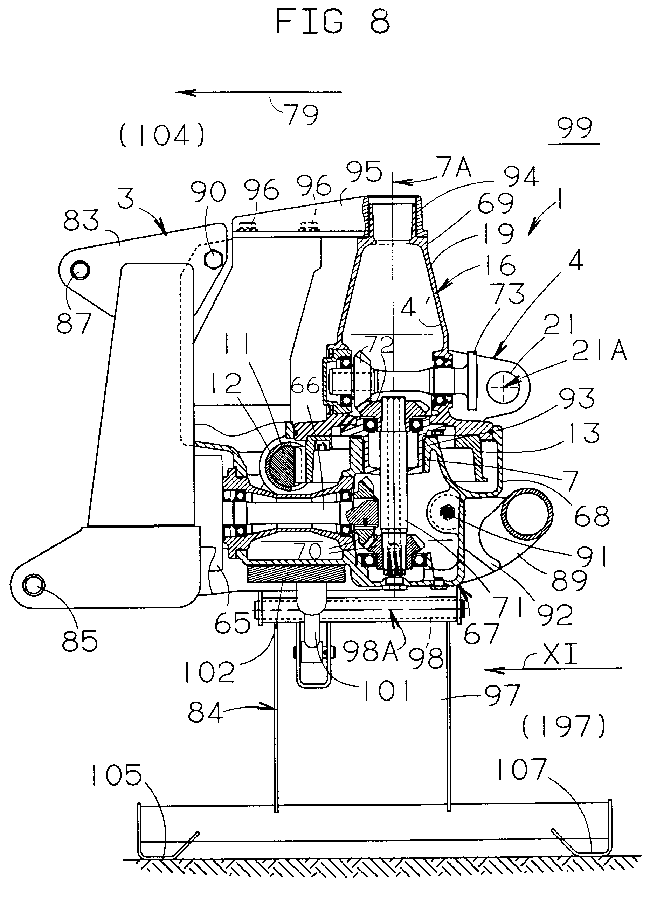

La faucheuse (1) se compose principalement d'une structure d'attelage (3) et d'un corps (4). La structure d'attelage (3) est destinée à être liée, à sa partie frontale, aux trois points d'attelage (5) du dispositif de relevage (6) du tracteur (2). Le corps (4) est lié à la structure d'attelage (3) dans le voisinage de l'une (4') de ses extrémités longitudinales (4', 4'') au moyen d'une articulation cylindrique (7) (figure 8) d'axe géométrique (7A) au moins sensiblement vertical. La position angulaire du corps (4) par rapport à la structure d'attelage (3) peut être modifiée en faisant pivoter le corps (4) autour dudit axe géométrique (7A). La mise dans la position angulaire souhaitée est réalisée sous l'action d'un vérin de manoeuvre (8) comprenant deux cylindres (9) fixés à la structure d'attelage (3). Les deux cylindres (9) sont au moins sensiblement identiques et s'étendent horizontalement dans le prolongement l'un de l'autre. A l'intérieur de chaque cylindre (9) du vérin de manoeuvre (8) est prévu un piston (10) (figure 2) monté de manière coulissante dans ledit cylindre (9). Entre les deux pistons (10) est implantée une crémaillère (11) guidée au moyen d'une pièce de guidage (12) placée au dos de ladite crémaillère (11). De cette sorte, la crémaillère (11) peut être translatée dans les cylindres (9) sous l'action de l'huile qui alimente l'une des extrémités longitudinales du vérin de manoeuvre (8), afin d'engréner avec un secteur denté (13) qui est centré sur l'axe géométrique (7A) et solidaire du corps (4) de la faucheuse (1). Grâce à cet agencement, le corps (4) peut être pivoté autour dudit axe géométrique (7A) sous l'action du vérin de manoeuvre (8), pour être amené de sa position de transport (104), où il s'étend au moins sensiblement dans la voie du tracteur (2) (figure 3), dans une position de travail (204), où il s'étend au moins sensiblement à côté de la voie du tracteur (2) (figures 1 et 2). Lorsque le corps (4) est dans sa position de travail (204), on empêche l'huile de s'écouler du vérin de manoeuvre (8), ce qui a pour effet de condamner le pivotement dudit corps (4) autour de l'axe géométrique (7A). A l'inverse, au tranport, on met en communication les deux chambres extérieures du vérin de manoeuvre (8), afin d'autoriser un libre pivotement du corps (4) autour de l'axe géométrique (7A). De ce fait, les manoeuvres au transport de la faucheuse (1) sont considérablement simplifiées.

Le corps (4) de la faucheuse (1) s'appuie sur le sol au moyen d'une seule roue (14) implantée à l'extrémité longitudinale (4'') du corps (4) éloignée de la structure d'attelage (3). Le corps (4) comporte principalement un mécanisme de récolte (15) et deux dispositifs de liaison (16, 17).

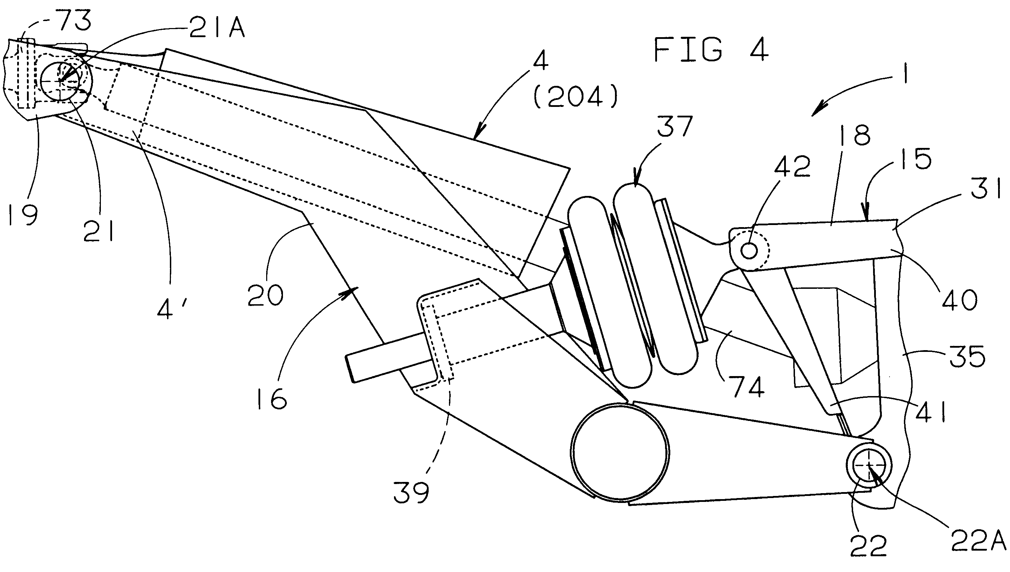

Le premier dispositif de liaison (16) qui est représenté en détail sur les figures 4 et 8, lie la première extrémité longitudinale (18) du mécanisme de récolte (15) à la structure d'attelage (3). A cet effet, le premier dispositif de liaison (16) se compose d'une tête d'attelage (19) montée pivotante autour de l'axe géométrique (7A) de la structure d'attelage (3) et d'un bras oscillant (20) liant le mécanisme de récolte (15) à ladite tête d'attelage (19). Grâce à ce bras oscillant (20) la première extrémité longitudinale (18) peut se déplacer en hauteur de manière importante par rapport à la structure d'attelage (3) afin de s'adapter au relief du terrain. Ce bras oscillant (20) est plus précisément lié à l'une de ses extrémités à la tête d'attelage (19) au moyen d'une première liaison pivot (21). L'axe géométrique (21A) de la première liaison pivot (21) s'étend au moins sensiblement orthogonalement à l'axe longitudinal du bras oscillant (20) et à l'axe géométrique (7A). Par ailleurs, l'axe longitudinal du bras oscillant (20) s'étend au moins sensiblement en direction de l'axe géométrique (7A). A son autre extrémité, le bras oscillant (20) est lié au mécanisme de récolte (15) au moyen d'une deuxième liaison pivot (22) d'axe géométrique (22A) au moins sensiblement parallèle à l'axe géométrique (21A) de la première liaison pivot (21). Du reste, l'axe géométrique (22A) de la deuxième liaison pivot (22) s'étend, vu suivant la direction de travail (23), au moins sensiblement à mi-hauteur du mécanisme de récolte (15) et forme, en vue de dessus, un angle (µ) d'environ 60° avec l'axe longitudinal (15') dudit mécanisme de récolte (15).

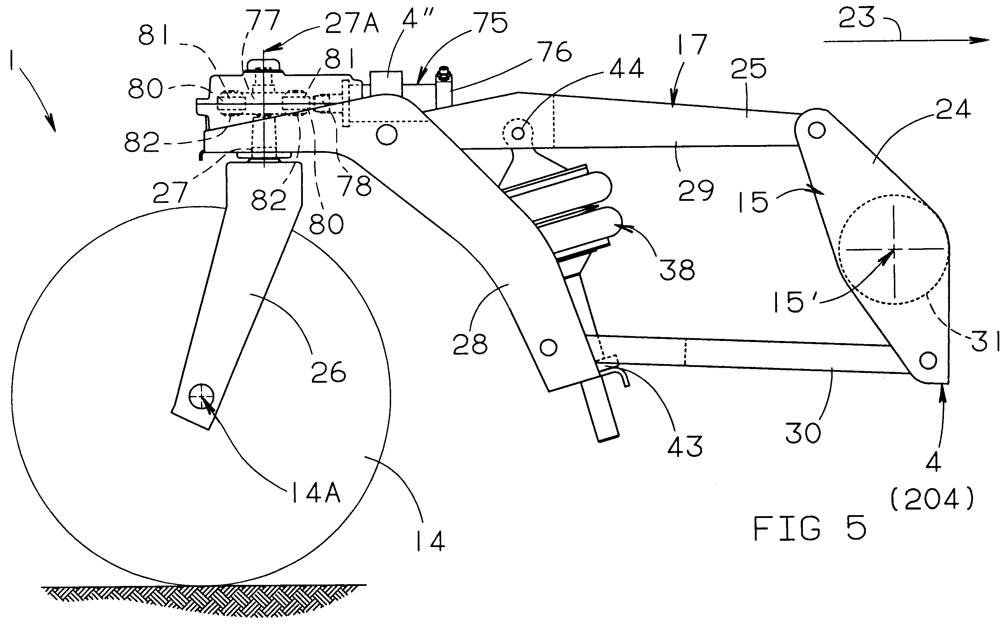

Le deuxième dispositif de liaison (17) (figure 5) lie la deuxième extrémité longitudinale (24) du mécanisme de récolte (15) à la roue (14). Ce deuxième dispositif de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15') du mécanisme de récolte (15) et l'organe de guidage (26) de la roue (14) est lié au quadrilatère déformable (25) au moyen d'une articulation cylindrique (27) d'axe géométrique (27A) au moins sensiblement vertical. Grâce à cet agencement, la deuxième extrémité longitudinale (24) du mécanisme de récolte (15) peut aisément se déplacer en hauteur par rapport à la roue (14), afin de s'adapter au relief du terrain, tout en autorisant le pivotement de l'organe de guidage (26) de la roue (14). Le quadrilatère déformable (25) comporte une console (28), à la partie supérieure de laquelle est articulé l'organe de guidage (26) de la roue (14), et qui est lié au mécanisme de récolte (15) au moyen de deux bielles (29, 30). Ce quadrilatère déformable (25) a au moins sensiblement la forme d'un parallélogramme dont le côté matérialisé par la console (28), s'étend vers le haut et vers l'arrière par rapport à la direction de travail (23), de sorte à ménager un espace pour la roue (14). Avantageusement, l'axe géométrique (27A) et l'axe de roulement (14A) de la roue (14) sont sensiblement concourants.

Entre les deux dispositifs de liaison (16, 17) s'étend le mécanisme de récolte (15). Le mécanisme de récolte (15) comporte une structure porteuse (31) à laquelle sont liés les deux dispositifs de liaison (16, 17). Cette structure porteuse (31) supporte une barre de coupe (32) équipée d'organes de coupe (33), et un rotor de traitement (34) - dont seul l'axe de rotation est représenté sur les figures 1 et 3 - destiné à traiter le produit coupé par lesdits organes de coupe (33). La structure porteuse (31) s'étend au moins sensiblement perpendiculairement à la direction de travail (23) et comporte un carter d'entrée (35) servant à l'entraînement des organes de coupe (33) et du rotor de traitement (34). Le carter d'entrée (35) est implanté dans le voisinage de la deuxième liaison pivot (22) liant le premier dispositif de liaison (16) au mécanisme de récolte (15). Du reste, le mécanisme de récolte (15) comporte aussi des organes de protection (36) qui s'étendent autour de la barre de coupe (32) et du rotor de traitement (34).

Le délestage du mécanisme de récolte (15) est réalisé au moyen de deux organes de délestage et de levage (37, 38), chacun associé au dispositif de liaison (16, 17) correspondant. Le premier organe de délestage et de levage (37) est implanté entre le bras oscillant (20) du premier dispositif de liaison (16) et la structure porteuse (31) du mécanisme de récolte (15). Comme visible sur la figure 4, le premier organe de délestage et de levage (37) est lié d'une part au moins sensiblement au milieu du bras oscillant (20) à l'aide d'une articulation élastique (39) et d'autre part au carter d'entrée (35) de la structure porteuse (31) au moyen de deux bras (40, 41). Ces deux bras (40, 41) forment avec le carter d'entrée (35) une triangulation très rigide, à laquelle est lié le premier dispositif de délestage et de levage (37) à l'aide d'une bague élastique (42) du type "silentbloc". Grâce à l'articulation élastique (39) et à la bague élastique (42), l'organe de délestage et de levage (37) est d'un montage aisé et d'un fonctionnement silencieux. De surcroît, les vibrations sont amorties.

Le deuxième organe de délestage et de levage (38) (figure 5), s'étend entre la partie inférieure de la console (28) du quadrilatère déformable (25) et la bielle supérieure (29) dudit quadrilatère déformable (25). Là aussi, l'organe de délestage et de levage (38) est lié au quadrilatère déformable (25) au moyen d'une articulation élastique (43) et d'une bague élastique (44). Compte tenu de leur agencement, les deux organes de délestage et de levage (37, 38) assurent, lors du travail, le délestage des extrémités longitudinales (18, 24) du mécanisme de récolte (15).

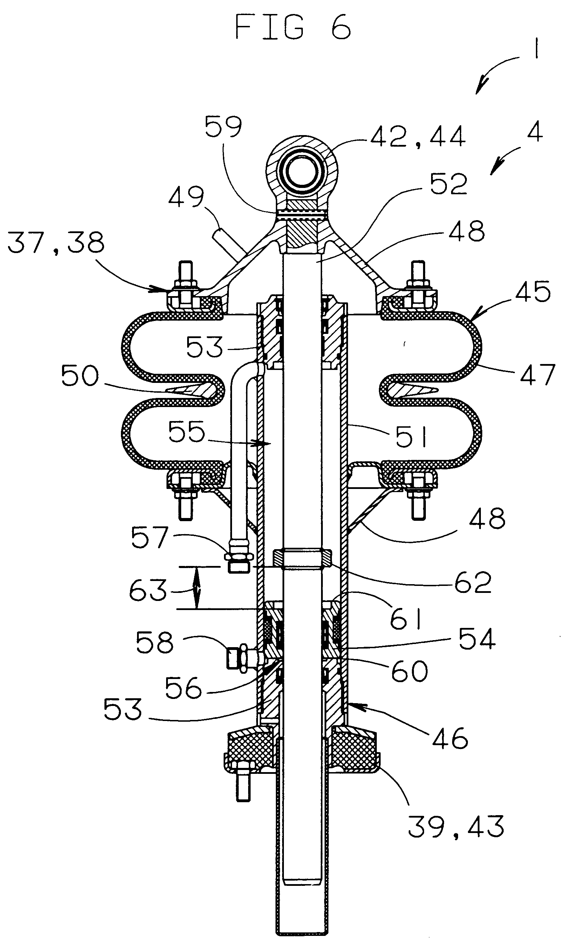

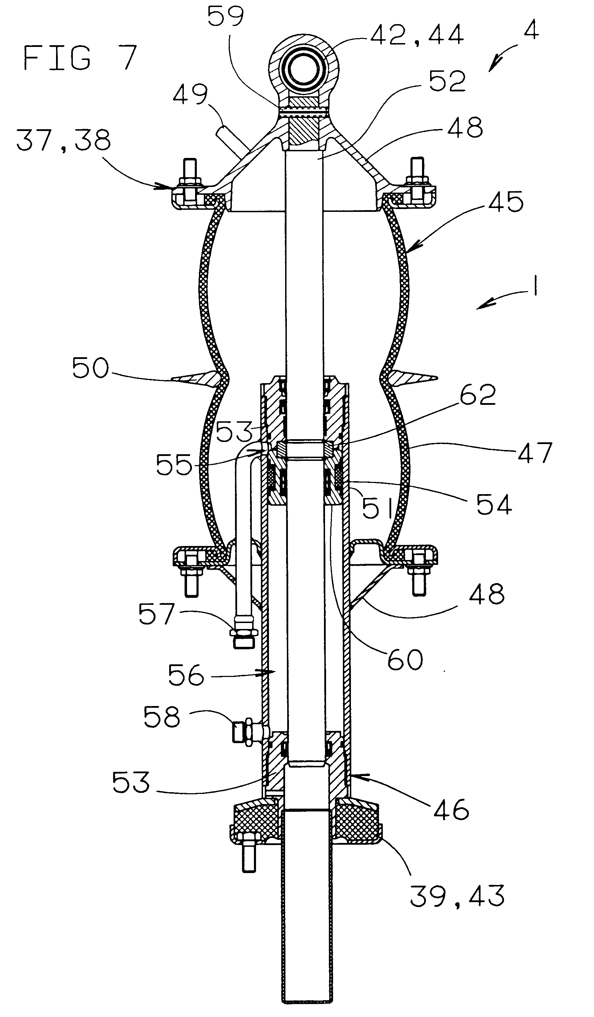

Sur les figures 6 et 7 apparaît, en détail, un tel organe de délestage et de levage (37, 38). Celui-ci comporte un ressort à gaz (45) servant à délester le mécanisme de récolte (15), monté en parallèle avec un vérin de levage (46) permettant de lever ledit mécanisme de récolte (15) lorsque l'utilisateur le souhaite. Le ressort à gaz (45) comporte une enveloppe déformable sous pression et deux flasques (48) liés chacun à une extrémité longitudinale correspondante de ladite enveloppe déformable (47). Le ressort à gaz (45) contient un gaz qui peut être amené à la pression désirée au travers d'une valve (49) implantée sur l'un des flasques (48). En gonflant plus ou moins l'enveloppe déformable (47) au travers de la valve (49), l'utilisateur a la possibilité d'adapter la rigidité du ressort à gaz (45) aux conditions de travail rencontrées.

Avantageusement, le ressort à gaz (45) contient de l'air, ce qui permet à l'utilisateur de gonfler aisément l'enveloppe déformable (47) au moyen d'une simple pompe à air. En outre, pour limiter la déformation latérale de l'enveloppe déformable (47) et la contraindre à une déformation longitudinale plus importante, l'enveloppe déformable (47) est entourée d'un organe de rigidification latérale (50).

Le vérin de levage (46), quant à lui, comporte notamment un cylindre (51) et une tige (52). La tige (52) est fixée au flasque supérieur (48) du ressort à gaz (45) au moyen d'une goupille (59), alors que le cylindre (51) est lié rigidement au flasque inférieur (48) dudit ressort à gaz (45). A chacune de ses extrémités, le cylindre (51) est muni d'une bague de guidage étanche (53) permettant à la tige (52) de déboucher de part et d'autre du cylindre (51). Au travail, lorsque le ressort à gaz (45) s'allonge et se raccourcit sous l'action du déplacement en hauteur du mécanisme de récolte (15), les deux flasques (48) du ressort à gaz (45) se rapprochent et s'éloignent l'un de l'autre pendant que la tige (52) coulisse dans le cylindre (51). Etant donné qu'aucun élément ne gêne le déplacement de la tige (52) dans le cylindre (51), le mécanisme de récolte (15) peut aisément être délesté au travail.

Afin de lever le mécanisme de récolte (15) grâce au vérin de levage (46), il est prévu un piston (54) servant à allonger ledit vérin de levage (46). Le piston (54) est monté coulissant sur la tige (52) et sépare le cylindre (51) en deux chambres distinctes (55, 56), chacune alimentée au travers d'une conduite (57, 58) respective. Au travail, la chambre inférieure (56) du cylindre (51) est vide et la face inférieure (60) du piston (54) s'appuie, sous l'action du fluide contenu dans la chambre supérieure (55), contre la bague de guidage inférieure (53). Par ailleurs, la face supérieure (61) du piston (54) est destinée à s'appuyer contre un collet (62) implanté un peu plus haut sur la tige (52) du vérin de levage (46). Comme dit précédemment, le piston (54) ne gêne pas le fonctionnement du ressort à gaz (45) durant le travail, étant donné qu'il subsiste un jeu fonctionnel (63) entre la face supérieure (61) du piston (54) et le collet (62) de la tige (52). Mais lorsque l'utilisateur désire lever le mécanisme de récolte (15), il alimente depuis le tracteur (2) la chambre inférieure (56) du cylindre (51), ce qui a pour effet de translater le piston (54) vers le haut. Dès l'instant où le piston (54) commence à pousser le collet (62) de la tige (52) vers le haut, le vérin de levage (46) et le ressort à gaz (45) s'allongent. Ce faisant, le piston (54) et la tige (52) se translatent jusqu'à ce que le piston (54) arrive en bout de course. Dans sa position levée, le mécanisme de récolte (15) s'étend au moins sensiblement parallèlement au-dessus du sol et l'action des ressorts à gaz (45) est annulée (figure 7).

L'entraînement du mécanisme de récolte (15) est réalisé à partir de la prise de force (non représentée) du tracteur (2), qui entraîne, par l'intermédiaire d'un arbre télescopique à joints universels (64), un limiteur de couple (65) monté sur l'arbre d'entrée (66) d'un dispositif de transmission de mouvement (67) (figure 8). Le dispositif de transmission (67) comporte un carter inférieur (68) solidaire de la structure d'attelage (3) et un carter supérieur (69) solidaire de la tête d'attelage (19). L'arbre d'entrée (66) du carter inférieur (68) du dispositif de transmission de mouvement (67) s'étend suivant la direction d'avancement (23, 79) du tracteur (2) et entraîne, par l'intermédiaire d'un premier couple de roues dentées coniques (70), un arbre intermédiaire (71) dont l'axe de rotation est confondu avec l'axe géométrique (7A) et qui entraîne, par l'intermédiaire d'un deuxième couple de roues dentées coniques (72), l'arbre de sortie (73) du carter supérieur (69). Ce dernier entraîne, par l'intermédiaire d'un autre arbre télescopique à joints universels (74) (figures 1, 3 et 4), l'arbre d'entrée (non représenté) du carter d'entrée (35) du mécanisme de récolte (15). Afin de réduire l'angle de fonctionnement des joints universels de cet arbre télescopique (74), l'arbre de sortie (73) du carter supérieur (69) s'étend, au travail normal, au moins sensiblement au même niveau que l'arbre d'entrée (non représenté) du carter d'entrée (35) du mécanisme de récolte (15). D'autres particularités et avantages de la structure d'attelage (3) seront encore décrites ultérieurement.

En vue du transport, le pivotement de l'organe de guidage (26) de la roue (14) peut être condamné au moyen d'un dispositif de verrouillage (75) (figures 1, 3 et 5). Le dispositif de verrouillage (75) comporte notamment un vérin de positionnement (76) fixé à la console (28) du quadrilatère déformable (25) et un levier (77) lié rigidement à l'organe de guidage (26) de la roue (14). Au travail, le vérin de positionnement (76) n'agit pas sur ledit levier (77), ce qui permet à la roue (14) de s'orienter automatiquement autour de l'axe géométrique (27A) en fonction de son déplacement. A l'opposé, en vue du transport, le vérin de positionnement (76) agit sur le levier (77) par l'intermédiaire d'un organe d'orientation (78), de sorte à orienter la roue (14) suivant la direction de transport (79) et à maintenir ladite roue (14) dans sa position de transport (figure 3). A cet effet, le levier (77) présente deux butées (80) s'étendant de part et d'autre de l'axe géométrique (27A) et qui sont chacune réalisée sous forme d'un galet (81). Compte tenu du fait que chaque galet (81) est en sus monté pivotant autour d'un axe (82) dirigé au moins sensiblement verticalement, l'orientation et le verrouillage de la roue (14) s'effectuent aisément.

Préférentiellement, l'axe géométrique (7A), le centre des masses (non représenté) du mécanisme de récolte (15) et l'axe géométrique (27A) sont au moins sensiblement coplanaires.

La structure d'attelage (3) de cette faucheuse (1) selon l'invention présente encore les particularités et les avantages suivants.

La structure d'attelage (3) se compose principalement d'un cadre trois points (83) et du carter inférieur (68) (figure 8). Le cadre trois points (83) est destiné à être lié aux trois points d'attelage (5) du tracteur (2) et comporte, à cet effet, deux points d'attelage inférieurs (85) destinés à être liés aux bras inférieurs (86) du dispositif de relevage (6) du tracteur (2), ainsi qu'un point d'attelage supérieur (87) destiné à être lié à la bielle d'attelage (88) dudit dispositif de relevage (6) du tracteur (2).

Le cadre trois points (83) comporte également, au niveau des points d'attelage inférieurs (85), un support (89) de forme tubulaire cintrée, qui s'étend au moins sensiblement sous le carter inférieur (68), afin de supporter une partie du poids de ce dernier et du premier dispositif de liaison (16). Le carter inférieur (68) est lié rigidement au cadre trois points (83) au moyen de seulement deux boulons (90, 91) dirigés au moins sensiblement perpendiculairement à l'arbre d'entrée (66) et au moins sensiblement horizontalement. L'un (90) des boulons (90, 91) est implanté au moins sensiblement à la même hauteur que le point d'attelage supérieur (87) du cadre trois points (83) et traverse l'extrémité supérieure du carter inférieur (68), alors que l'autre boulon (91) est implanté à l'arrière et au bas du carter inférieur (68) où il fixe ledit carter inférieur (68) à deux languettes (92) du support (89) situées respectivement de part et d'autre dudit carter inférieur (68). Grâce à un tel agencement, le carter inférieur (68) peut être fixé rapidement et solidement au cadre trois points (83).

Le montage du carter supérieur (69), c'est-à-dire de la tête d'attelage (19), sur le carter inférieur (68) est réalisé au moyen d'un premier palier (93) appartenant à l'articulation cylindrique (7) et situé à la partie inférieure du carter supérieur (69). Afin d'assurer un bon guidage du carter supérieur (69) par rapport à la structure d'attelage (3), l'articulation cylindrique (7) présente également un deuxième palier (94) implanté à la partie supérieure dudit carter supérieur (69). A cet effet, la structure d'attelage (3) comporte en sus un bras (95) comprenant le deuxième palier (94) et fixé à la partie supérieure du carter inférieur (68) au moyen de seulement deux vis (96).

Sur la structure d'attelage (3) est en sus implanté un dispositif de dépose (84) (figures 8 à 12). Ce dernier est destiné à supporter une partie du poids de la faucheuse (1) lors de la dépose, sans pour autant gêner, lors du travail, le passage de l'andain de produit précédemment coupé, sous ladite structure d'attelage (3). A cet effet, le dispositif de dépose (84) de cette faucheuse (1) selon l'invention comporte deux béquilles (97), chacune liée à l'une de leur extrémité au support (89) du cadre trois points (83) au moyen d'une liaison cylindrique (98) correspondante d'axe géométrique (98A) dirigé au moins sensiblement parallèlement à la direction d'avance (23, 79) de la faucheuse (1). Ces liaisons cylindriques (98) sont implantées juste derrière les deux points d'attelage inférieurs (85) et agencés de manière au moins sensiblement symétrique de part et d'autre d'un plan médian (99) qui contient l'axe géométrique (7A) et qui est dirigé au moins sensiblement suivant la direction d'avance (23, 79) (figures 8 à 12).

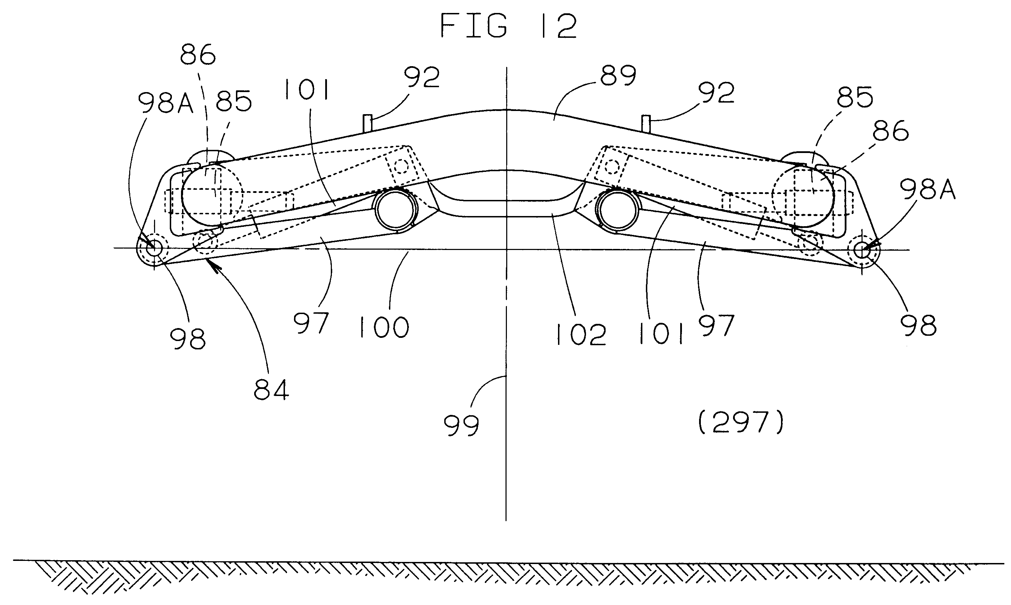

Grâce à un tel agencement, les béquilles (97) peuvent être pivotées autour de l'axe géométrique (98A) de leur liaison cylindrique (98) respective, d'une position de dépose (197) (figures 8 à 11) dans laquelle les béquilles (97) peuvent supporter de manière stable avec la roue (14), la totalité du poids de la faucheuse (1), vers une position escamotée (297) (figures 1, 3 et 12), dans laquelle les béquilles (97) autorisent le transport et ne gênent pas, durant le travail, le passage sous la structure d'attelage (3) de l'andain de produit précédemment coupé. Dans leur position escamotée (297), les béquilles (97) s'étendent juste en-dessous du support (89). En sus, la hauteur de chaque béquille (97) est inférieure à la moitié de la largeur du support (89), ce qui permet d'amener les béquilles (97) en grande partie au-dessus d'un plan géométrique (100) contenant les axes géométriques (98A) des liaisons cylindriques (98) (figure 12).

Le pivotement des béquilles (97) de la position escamotée (297) dans la position de dépose (197), et vice versa, est réalisé sous l'action de deux vérins de mise en position (101) à double effet. Pour ce faire, chaque vérin de mise en position (101) est articulé d'une part environ aux trois quarts de la hauteur de la béquille (97) respective et d'autre part dans le voisinage du plan médian (99) à une traverse (102) fixée au support (89) et épousant au moins sensiblement la forme de la partie inférieure du carter inférieur (68) (figures 8, 11 et 12). Comme cette traverse (102) supporte par ailleurs le carter inférieur (68) lors de son montage, le montage de ce dernier est simplifié.

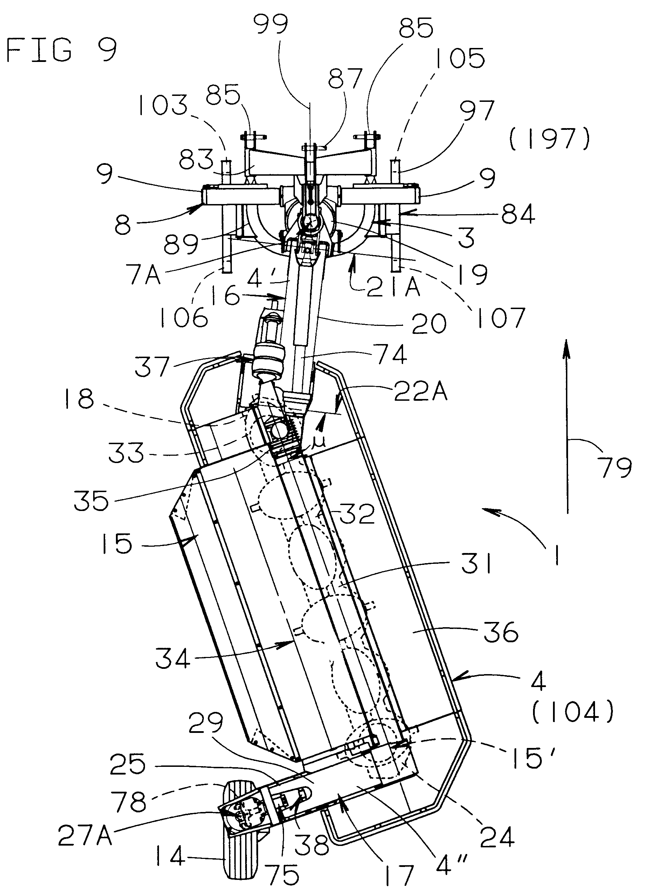

Dans la position de dépose (197), chaque béquille (97) s'appuie sur le sol en deux points de contact (103, 105, 106, 107) (figures 8 à 11). Afin d'assurer une bonne stabilité à la structure d'attelage (3), les quatre points de contact (103, 105, 106, 107) sont agencés, en vue de dessus, de part et d'autre des deux axes géométriques (98A) des deux liaisons cylindriques (98). Les points de contact (103, 105) les plus en avant sont agencés, en vue de dessus, au moins sensiblement au même niveau que les trois points d'attelage (85, 87) du cadre trois points (83), alors que les deux points de contact (106, 107) les plus en arrière sont implantés au moins sensiblement derrière l'axe géométrique (21A) de la liaison pivot (21), lorsque le corps (4) est déposé dans sa position de transport (104) (figure 9). Etant donné que deux points de contact (103, 105, 106, 107) sont respectivement agencés de part et d'autre dudit axe géométrique (21A), la structure d'attelage (3) s'appuie sur le sol de manière très stable. De plus, ces quatre points de contact (103, 105, 106, 107), combinés avec la roue (14), définissent un grand polygone de sustentation à l'intérieur duquel s'étend aisément la projection du centre des masses (non représenté) de la faucheuse (1). Ceci permet à l'utilisateur de déposer sa faucheuse (1) en toute sécurité lorsque le corps (4) s'étend dans la position de transport (104).

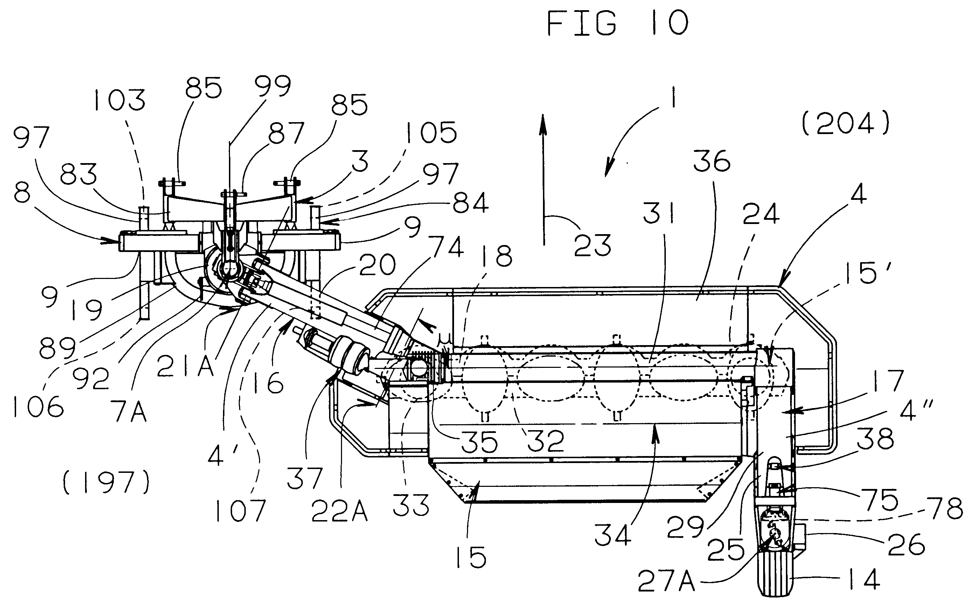

La faucheuse (1) selon l'invention peut également être déposée lorsque le corps (4) s'étend dans sa position de travail (204) (figure 10). En effet, là aussi, deux points de contact (103, 105, 106, 107) sont agencés respectivement de part et d'autre de l'axe géométrique (21A) et la projection du centre des masses (non représenté) du corps (4) s'étend dans ledit polygone de sustentation. De surcroît, compte tenu de l'agencement particulièrement avantageux des points de contact (103, 105, 106, 107), l'axe géométrique (21A) coupe le quadrilatère défini par lesdits points de contact (103, 105, 106, 107) quelle que soit la position dans laquelle le corps (4) peut être pivoté par rapport à la structure d'attelage (3) autour de l'axe géométrique (7A). Ceci permet à l'utilisateur de déposer la faucheuse (1) de manière stable quelle que soit la position du corps (4) par rapport à la structure d'attelage (3).

La faucheuse (1) selon l'invention fonctionne de la manière suivante :

Lorsque la faucheuse (1) est déposée avec le corps (4) s'étendant suivant la direction de transport (79) (figures 8, 9 et 11), ladite faucheuse (1) s'appuie sur le sol au moyen des béquilles (97), placées en position de dépose (197) et de la roue (14), verrouillée suivant la direction de transport (79). Les deux vérins de levage (46), quant à eux, maintiennent le mécanisme de récolte (15) au moins sensiblement parallèlement au-dessus du sol. Comme le corps (4) de la faucheuse (1) s'étend au moins sensiblement dans le prolongement de la structure d'attelage (3), il ne faut qu'une place réduite pour le remisage.

En vue du transport, on vient tout d'abord lier les deux bras inférieurs (86) et la bielle d'attelage (88) du dispositif de relevage (6) du tracteur (2) aux trois points d'attelage (85, 87) de la structure d'attelage (3). A cette occasion, l'utilisateur met également en place l'arbre télescopique à joints universels (64), servant à transmettre le mouvement de rotation du tracteur (2) à la faucheuse (1), ainsi que les branchements hydrauliques destinés à alimenter les différents vérins (8, 46, 76, 101) de la faucheuse (1) depuis le tracteur (2). Ensuite l'utilisateur commande, depuis la cabine du tracteur (2), le dispositif de relevage (6), de sorte à lever légèrement l'avant de la faucheuse (1) pour éloigner les béquilles (97) du sol. Dès lors, il suffit à l'utilisateur de placer les béquilles (97) dans leur position escamotée (297) au moyen des vérins de mise en position (101), et le transport peut débuter. Vu la grande manoeuvrabilité de la faucheuse (1) selon l'invention, elle peut aisément être sortie de l'endroit de remisage ou y être amenée.

Au transport (figures 3, 7 et 12), le vérin de manoeuvre (8) autorise le pivotement du corps (4) autour de l'axe géométrique (7A), tandis que la roue (14) est verrouillée dans la direction de transport (79). Les deux vérins de levage (46), quant à eux, maintiennent toujours le mécanisme de récolte (15) au moins sensiblement parallèlement au-dessus du sol. Comme le corps (4) de la faucheuse (1) s'étend au moins sensiblement dans la voie du tracteur (2), les manoeuvres au transport sont facilitées.

Pour amener le corps (4) de la faucheuse (1) de sa position de transport (104) dans sa position de travail (204), on autorise le pivotement de la roue (14) autour de l'axe géométrique (27A) au moyen du vérin de positionnement (76) et on pivote le corps (4) dans sa position de travail (204) sous l'action du vérin de manoeuvre (8). Vu que le corps (4) s'appuie sur le sol, tant dans sa position de transport (104) que dans sa position de travail (204) au moyen d'au moins une roue (14), le tracteur conserve une bonne stabilité. Par ailleurs, compte tenu du dispositif de transmission de mouvement (67) perfectionné, le mécanisme de récolte (15) est susceptible d'être entraîné dans toutes les positions dans lesquelles le corps (4) peut être pivoté autour de l'axe géométrique (7A). Dans chacune de ses positions, la faucheuse (1) peut également être déposée sans que le mécanisme de récolte (15) ne s'appuie obligatoirement sur le sol.

Au travail (figures 1, 2, 4, 5 et 6), le vérin de manoeuvre (8) condamne le pivotement du corps (4) autour de l'axe géométrique (7A), tandis que la roue (14) est susceptible de pivoter autour de l'axe géométrique (27A). L'action des vérins de levage (46), quant à elle, est supprimée de sorte à permettre au mécanisme de récolte (15) de s'adapter au relief du sol. En sus, vu que chaque extrémité longitudinale (18, 24) est délestée, le mécanisme de récolte (15) passe aisément par dessus les obstacles que peut présenter le relief du sol.

Du reste, il va de soi que si la faucheuse (1) peut être déposée de manière stable en ne s'appuyant sur le sol qu'au moyen du dispositif de dépose (84) et de la roue (14), il est également possible de laisser reposer le corps (4), voire le mécanisme de récolte (15) sur le sol, sans que la stabilité de la dépose ne soit remise en question.

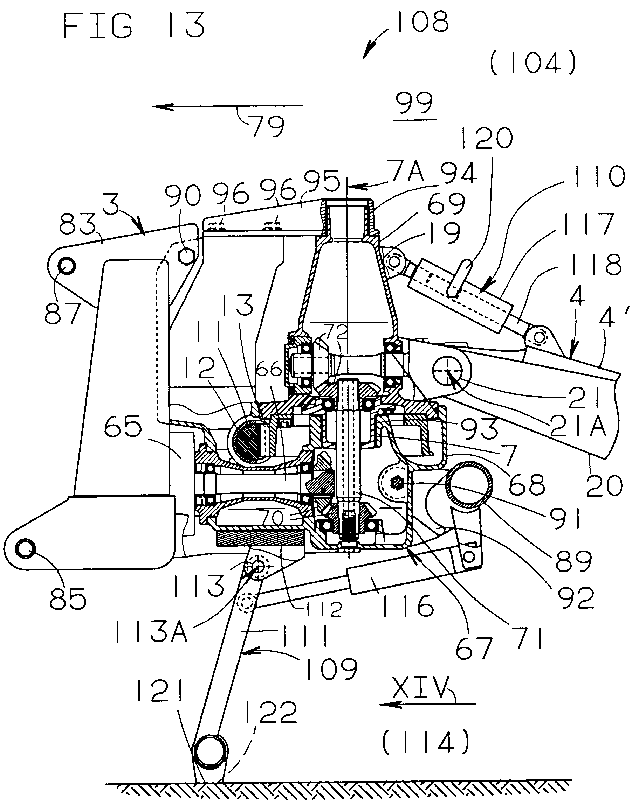

Les figures 13 à 15 montrent un autre exemple de réalisation d'une faucheuse (108) selon l'invention.

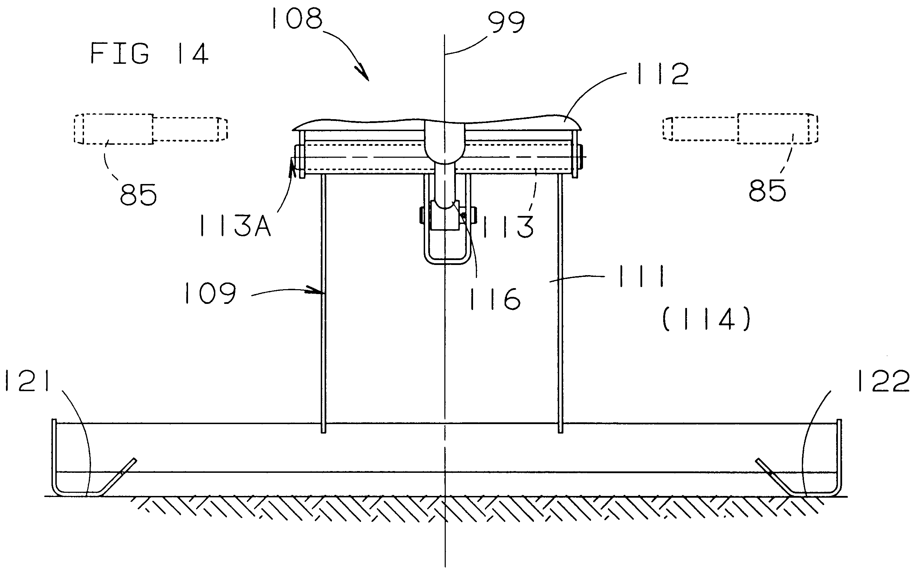

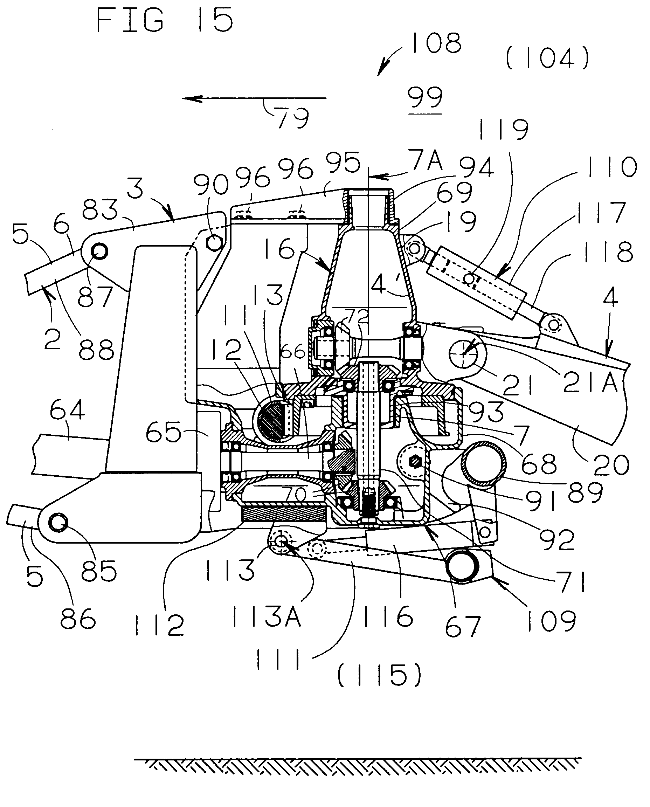

Cette faucheuse (108) comporte les mêmes moyens que la faucheuse (1) précédemment décrite, et qui ne seront de ce fait pas redécrits. Toutefois, cette faucheuse (108) comporte un autre dispositif de dépose (109) collaborant avec un verrou (110). Le dispositif de dépose (109) de cette faucheuse (108) selon l'invention comporte une béquille (111) liée à l'une de ses extrémités à la traverse (112), solidaire de la structure d'attelage (3), au moyen d'une liaison cylindrique (113) d'axe géométrique (113A) dirigé au moins sensiblement perpendiculairement à la direction d'avance (23, 79) de la faucheuse (108). Préférentiellement, cette liaison cylindrique (113) est implantée juste derrière les deux points d'attelage inférieurs (85) du cadre trois points (83) et de manière au moins sensiblement horizontale. Comme pour la précédente faucheuse (1), cette béquille (111) peut être pivotée autour de l'axe géométrique (113A) de sa liaison cylindrique (113) d'une position de dépose (114) (figures 13 et 14), dans laquelle la béquille (111) peut supporter de manière stable avec la roue (14), la totalité du poids de la faucheuse (108), vers une position escamotée (115) (figure 15), dans laquelle la béquille (111) autorise le transport et ne gêne pas, au travail, le passage sous la structure d'attelage (3) de l'andain de produit précédemment coupé. Dans la position escamotée (115), la béquille (111) s'étend juste en-dessous du support (89) de la structure d'attelage (3) et au moins sensiblement à la même hauteur que l'axe géométrique (113A) de la liaison cylindrique (113).

Le pivotement de la béquille (111) de sa position escamotée (115) dans sa position de dépose (114), et vice versa, est également réalisé au moyen d'un vérin de mise en position (116) à double effet. Ce dernier est articulé d'une part environ aux trois quarts de la hauteur de la béquille (111) et d'autre part à l'arrière du support (89).

Le verrou (110), quant à lui, est destiné à condamner le pivotement de la structure d'attelage (3) par rapport au corps (4) autour de l'axe géométrique (21A) de la liaison pivot (21) lorsque la faucheuse (108) est en position de dépose. A cet effet, le verrou (110) comporte un fourreau (117) articulé à la tête d'attelage (19) et dans lequel est montée coulissante une tige (118) articulée au bras oscillant (20). Au travail ou au transport, le pivotement du bras oscillant (20) par rapport à la tête d'attelage (19) autour de l'axe géométrique (21A) a pour effet de translater la tige (118) dans le fourreau (117) sans gêner l'adaptation au relief du sol de la faucheuse (108). En vue de la dépose, le fourreau (117) est pourvu d'une ouverture (119) (figure 15) le traversant radialement et implantée juste devant la tige (118). De cette sorte, en plaçant une poignée (120) (figure 13) dans ladite ouverture (119), on limite le pivotement du bras oscillant (20) vers le haut par rapport à la tête d'attelage (19). Dans sa position de dépose (114), la béquille (111) s'appuie sur le sol en deux points (121, 122) implantés, en vue de dessus, au moins sensiblement au même endroit que les points de contact (103, 105) les plus en avant des béquilles (97) de la faucheuse (1) précédemment décrite et devant l'axe géométrique (113A) de la liaison cylindrique (113). Compte tenu de l'agencement particulièrement avantageux des points de contact (121, 122) combiné avec l'action du verrou (110), le centre des masses (non représenté) de la faucheuse (108) s'étend dans le triangle de sustentation défini par les deux points de contact (121, 122) et la roue (14), tandis que le verrou (110) évite que la structure d'attelage (3) ne pivote par rapport au bras oscillant (20). Ceci permet à l'utilisateur de déposer la faucheuse (108) en toute sécurité lorsque le corps (4) s'étend dans la position de transport (104).

Cette faucheuse (108) selon l'invention peut également être déposée lorsque le corps (4) s'étend, en vue de dessus, dans sa position de travail (204). En effet, là aussi, le centre des masses (non représenté) de la faucheuse (108) s'étend dans le triangle de sustentation défini par les deux points de contact (121, 122) et la roue (14). De surcroît, l'agencement particulièrement avantageux des points de contact (121, 122), permet à l'utilisateur de déposer la faucheuse (108) de manière stable quelle que soit la position angulaire du corps (4) par rapport à la structure d'attelage (3) autour de l'axe géométrique (7A).

La faucheuse (108) selon l'invention fonctionne d'une manière identique à la faucheuse (1) précédemment décrite. Il faut cependant tenir compte du verrou (110). En effet, lorsque l'utilisateur a levé légèrement l'avant de la faucheuse (108) au moyen du dispositif de relevage (6) pour éloigner la béquille (111) du sol, il faut en sus que l'utilisateur retire la poignée (120) du fourreau (117) du verrou (110) afin que la faucheuse (108) puisse s'adapter au relief du sol. Naturellement, toutes les autres spécificités de la précédente faucheuse (1) sont également valables pour la faucheuse (108).

Finalement différentes modifications restent possibles, notamment en ce qui concerne la constitution des divers éléments ou par substitution d'équivalents techniques, sans pour autant sortir du domaine de protection défini par les revendications.

## Revendications

1. Faucheuse (1) comportant une structure d'attelage (3) destinée à être liée rigidement à l'attelage (6) d'un véhicule moteur (2) et un corps (4) lié dans le voisinage de l'une (4') de ses deux extrémités longitudinales (4', 4'') à la structure d'attelage (3) au moyen d'une articulation cylindrique (7) d'axe géométrique (7A) dirigé vers le haut, ledit corps (4) pouvant être pivoté par rapport à la structure d'attelage (3) d'une position de travail (204) dans laquelle son axe longitudinal s'étend transversalement à la direction de travail (23), dans une position de transport (104), dans laquelle son axe longitudinal s'étend au moins sensiblement parallèlement à la direction de transport (79), ledit corps (4) comportant :
- une liaison pivot (21) agencée dans le voisinage de ladite articulation cylindrique (7) et présentant un axe géométrique (21A) dirigé au moins sensiblement perpendiculairement à l'axe géométrique (7A) de ladite articulation cylindrique (7) et au moins sensiblement perpendiculairement à l'axe longitudinal du corps (4), et
- une roue (14) implantée dans le voisinage de l'autre extrémité longitudinale (4'') du corps (4), par l'intermédiaire de laquelle le corps (4) s'appuie sur le sol,
caractérisée par le fait :
- que la faucheuse (1) comporte un dispositif de dépose (84) lié soit à la structure d'attelage (3), soit entre ladite structure d'attelage (3) et la liaison pivot (21) du corps (4), et destiné à supporter une partie du poids de la faucheuse (1) lors de la dépose,
- que ledit dispositif de dépose (84) s'appuie sur le sol en au moins deux points de contact (103, 105, 106, 107) s'étendant, en vue de dessus, de part et d'autre de l'axe géométrique (21A) de ladite liaison pivot (21) ; et
- que le dispositif de dépose (84) comporte au moins une béquille (97) pouvant occuper deux positions distinctes (197, 297) : une position de dépose (197), dans laquelle elle est destinée à supporter une partie du poids de la faucheuse (1) et une position escamotée (297), dans laquelle elle ne gêne pas le passage du produit précédemment coupé sous ladite structure d'attelage (3).

2. Faucheuse (108) comportant une structure d'attelage (3) destinée à être liée rigidement à l'attelage (6) d'un véhicule moteur (2) et un corps (4) lié dans le voisinage de l'une (4') de ses deux extrémités longitudinales (4', 4'') à la structure d'attelage (3) au moyen d'une articulation cylindrique (7) d'axe géométrique (7A) dirigé vers le haut, ledit corps (4) pouvant être pivoté par rapport à la structure d'attelage (3) d'une position de travail (204), dans laquelle son axe longitudinal s'étend transversalement à la direction de travail (23), dans une position de transport (104), dans laquelle son axe longitudinal s'étend au moins sensiblement parallèlement à la direction de transport (79), ledit corps (4) comportant :
- une liaison pivot (21) agencée dans le voisinage de ladite articulation cylindrique (7) et présentant un axe géométrique (21A) dirigé au moins sensiblement perpendiculairement à l'axe géométrique (7A) de ladite articulation cylindrique (7) et au moins sensiblement perpendiculairement à l'axe longitudinal du corps (4), et
- une roue (14) implantée dans le voisinage de l'autre extrémité longitudinale (4'') du corps (4), par l'intermédiaire de laquelle le corps (4) s'appuie sur le sol,
caractérisée par le fait :
- que la faucheuse (108) comporte un dispositif de dépose (109) lié soit à la structure d'attelage (3), soit entre ladite structure d'attelage (3) et la liaison pivot (21) du corps (4), et destiné à supporter une partie du poids de la faucheuse (108) lors de la dépose,
- que la faucheuse (108) comporte en sus un verrou (110) condamnant le pivotement de la structure d'attelage (3) par rapport au corps (4) autour de l'axe géométrique (21A) de ladite liaison pivot (21) lorsque la faucheuse (108) est déposée, et
- que le dispositif de dépose (109) comporte une béquille (111) pouvant occuper deux positions distinctes (114, 115) : une position de dépose (114) dans laquelle elle est destinée à supporter une partie du poids de la faucheuse (108) et une position escamotée (115), dans laquelle elle ne gêne pas le passage du produit précédemment coupé sous ladite structure d'attelage (3).

3. Faucheuse selon la revendication 2, caractérisée par le fait qu'elle comporte une seule roue (14) et que le dispositif de dépose (109) s'appuie sur le sol en au moins deux points (121, 122).

4. Faucheuse selon la revendication 3, caractérisée par le fait que lesdits points de contact (121, 122) s'étendent, en vue de dessus, devant l'axe géométrique (21A) de ladite liaison pivot (21).

5. Faucheuse selon la revendication 1, ou bien la revendication 3 ou 4, caractérisée par le fait que les deux points de contact (103, 105, 106, 107 ; 121, 122) s'étendent respectivement de part et d'autre d'un plan médian (99) contenant l'axe géométrique (7A) de ladite articulation cylindrique (7) et dirigé au moins sensiblement parallèlement à la direction de transport (79) de la faucheuse (1 ; 108).

6. Faucheuse selon l'une des revendications 1 à 5, caractérisée par le fait que la structure d'attelage (3) comporte deux points d'attelage inférieurs (85) destinés à être liés aux bras inférieurs (86) du véhicule moteur (2) et un point d'attelage supérieur (87) destiné à être lié à la bielle d'attelage (88) dudit véhicule moteur (2).

7. Faucheuse selon l'une des revendications 1 à 6, caractérisée par le fait que le dispositif de dépose (84 ; 109) comporte au moins un organe de mise en position (101 ; 116) amenant la (les) béquille(s) (97 ; 111) de sa (leur) position de dépose (197 ; 114) dans sa (leur) position escamotée (297 ; 115) et vice versa.

8. Faucheuse selon l'une des revendications 1 à 7, caractérisée par le fait que la (les) béquille(s) (97 ; 111) est (sont) liée(s) soit à la structure d'attelage (3), soit entre ladite structure d'attelage (3) et la liaison pivot (21) du corps (4) au moyen d'une liaison cylindrique (98 ; 113) (respective).

9. Faucheuse selon la revendication 8 et la revendication 1, caractérisée par le fait qu'il est prévu deux béquilles (97) et que l'axe géométrique (98A) de chaque liaison cylindrique (98) est dirigé au moins sensiblement parallèlement à la direction de transport (79) de la faucheuse (1).

10. Faucheuse selon la revendication 9, caractérisée par le fait que chaque béquille (97) comporte deux points de contact (103, 105, 106, 107) qui s'étendent, en vue de dessus, respectivement de part et d'autre de l'axe géométrique (21A) de ladite liaison pivot (21), lorsque le corps (4) est déposé dans sa position de transport (104).

11. Faucheuse selon la revendication 9 ou 10, caractérisée par le fait que les liaisons cylindriques (98) s'étendent, lorsque le corps (4) est dans sa position de transport (104), de manière au moins sensiblement symétrique de part et d'autre d'un plan médian (99) qui contient l'axe géométrique (7A) de ladite articulation (7) et qui est dirigé parallèlement à la direction de transport (79) de la faucheuse (1).

12. Faucheuse selon la revendication 6 et l'une des revendications 9 à 11, caractérisée par le fait que chaque liaison cylindrique (98) est implantée juste derrière les trois points d'attelage (85, 87) de la structure d'attelage (3) et de sorte que le prolongement de leur axe géométrique (98A) respectif comporte au moins sensiblement le point d'attelage inférieur (85) correspondant de la structure d'attelage (3), lorsque le corps (4) est dans sa position de transport (104).

13. Faucheuse selon la revendication 8 et l'une des revendications 2 à 4, caractérisée par le fait que l'axe géométrique (113A) de la liaison cylindrique (113) s'étend transversalement à la direction de travail (79) de la faucheuse (108).

14. Faucheuse selon la revendication 13 ou l'une des revendications 2 à 4, caractérisée par le fait que le corps (4) comporte une tête d'attelage (19) qui est liée d'une part à la structure d'attelage (3) au moyen de ladite articulation cylindrique (7) et qui est liée d'autre part au reste du corps (4) à l'aide de ladite liaison pivot (21), et que le verrou (110) est implanté entre la tête d'attelage (19) et le reste du corps (4).

15. Faucheuse selon la revendication 14, caractérisée par le fait que le verrou (110) comporte un fourreau (117) articulé à la tête d'attelage (19) et dans lequel est montée coulissante une tige (118) articulée au reste du corps (4), et que le fourreau (117) est pourvu d'une ouverture (119) le traversant radialement et destinée à recevoir une poignée (120) servant à limiter le pivotement du reste du corps (4) par rapport à la tête d'attelage (19).

16. Faucheuse selon l'une des revendications 1 à 15, caractérisée par le fait que le dispositif de dépose (84 ; 109) est lié à la structure d'attelage (3).

17. Faucheuse selon l'une des revendications 1 à 16, caractérisée par le fait qu'elle peut également être déposée de manière stable lorsque le corps (4) s'étend, en vue de dessus, dans sa position de travail (204).

18. Faucheuse selon l'une des revendications 1 à 17, caractérisée par le fait qu'elle peut être déposée, de manière stable, dans toutes les positions dans lesquelles le corps (4) est susceptible d'être pivoté par rapport à la structure d'attelage (3) autour de l'axe géométrique (7A).

19. Faucheuse selon l'une des revendications 1 à 18, caractérisée par le fait que le corps (4) s'appuie sur le sol au moyen de ladite roue (14), quelle que soit la position angulaire dans laquelle il peut être pivoté autour de l'axe géométrique (7A) au moyen d'un organe de manoeuvre (8).

20. Faucheuse selon l'une des revendications 1 à 19, caractérisée par le fait que c'est une faucheuse à "disques" (33) avec ou sans organes de traitement (34) du produit coupé.

## Claims

1. Mower (1) including a hitching structure (3) intended to be connected rigidly to the hitch (6) of a motor vehicle (2) and a body (4) connected close to one (4') of its two longitudinal ends (4', 4'') to the hitching structure (3) by means of a cylindrical articulation (7) of upwardly-pointing geometric axis (7A), the said body (4) being pivotable with respect to the hitching structure (3) from a work position (204) in which its longitudinal axis runs transversely to the direction of work (23), into a transport position (104) in which its longitudinal axis runs at least substantially parallel to the direction of transport (79), the said body (4) including:
- a pivot connection (21) arranged close to the said cylindrical articulation (7) and having a geometric axis (21A) pointing at least substantially perpendicular to the geometric axis (7A) of the said cylindrical articulation (7) and at least substantially perpendicular to the longitudinal axis of the body (4), and
- a wheel (14) fitted close to the other longitudinal end (4'') of the body (4), by means of which wheel the body (4) rests on the ground,
***characterized in that***:
- the mower (1) includes a set-down device (84) connected either to the hitching structure (3), or between the said hitching structure (3) and the pivot connection (21) of the body (4), and intended to support some of the weight of the mower (1) when set down,
- the said set-down device (84) rests on the ground at least at two points of contact (103, 105, 106, 107) extending, viewed from above, on each side of the geometric axis (21A) of the said pivot connection (21); and
- the set-down device (84) includes at least one stand (97) which can occupy two distinct positions (197, 297): a set-down position (197) in which it is intended to support some of the weight of the mower (1), and a retracted position (297) in which it does not impede the passage of the previously cut product under the said hitching structure (3).

2. Mower (108) including a hitching structure (3) intended to be connected rigidly to the hitch (6) of a motor vehicle (2) and a body (4) connected close to one (4') of its two longitudinal ends (4', 4'') to the hitching structure (3) by means of a cylindrical articulation (7) of upwardly-pointing geometric axis (7A), the said body (4) being pivotable with respect to the hitching structure (3) from a work position (204) in which its longitudinal axis runs transversely to the direction of work (23), into a transport position (104) in which its longitudinal axis runs at least substantially parallel to the direction of transport (79), the said body (4) including:
- a pivot connection (21) arranged close to the said cylindrical articulation (7) and having a geometric axis (21A) pointing at least substantially perpendicular to the geometric axis (7A) of the said cylindrical articulation (7) and at least substantially perpendicular to the longitudinal axis of the body (4), and
- a wheel (14) fitted close to the other longitudinal end (4'') of the body (4), by means of which wheel the body (4) rests on the ground,
***characterized in that*****:**
- the mower (108) includes a set-down device (109) connected either to the hitching structure (3), or between the said hitching structure (3) and the pivot connection (21) of the body (4), and intended to support some of the weight of the mower (108) when set down,
- the mower (108) additionally includes a lock (110) preventing the hitching structure (3) from pivoting with respect to the body (4) about the geometric axis (21A) of the said pivot connection (21) when the mower (108) is set down, and
- the set-down device (109) includes a stand (111) which can occupy two distinct positions (114, 115): a set-down position (114) in which it is intended to support some of the weight of the mower (108), and a retracted position (115) in which it does not impede the passage of the previously cut product under the said hitching structure (3).

3. Mower according to Claim 2, ***characterized in that*** it includes a single wheel (14) and that the set-down device (109) rests on the ground at least at two points (121, 122).

4. Mower according to Claim 3, ***characterized in that*** the said points of contact (121, 122) extend, viewed from above, forward of the geometric axis (21A) of the said pivot connection (21).

5. Mower according to Claim 1, or Claim 3 or 4, ***characterized in that*** the two points of contact (103, 105, 106, 107; 121, 122) extend respectively on each side of a mid-plane (99) containing the geometric axis (7A) of the said cylindrical articulation (7) and pointing at least substantially parallel to the direction of transport (79) of the mower (1; 108).

6. Mower according to one of Claims 1 to 5, ***characterized in that*** the hitching structure (3) includes two lower hitching points (85) which are intended to be connected to the lower links (86) of the motor vehicle (2) and an upper hitching point (87) which is intended to be connected to the hitching rod (88) of the said motor vehicle (2).

7. Mower according to one of Claims 1 to 6, ***characterized in that*** the set-down device (84; 109) includes at least one positioning member (101; 116) bringing the stand(s) (97; 111) from its (their) set-down position (197; 114) into its (their) retracted position (297; 115) and vice versa.

8. Mower according to one of Claims 1 to 7, ***characterized in that*** the stand(s) (97; 111) is (are) connected either to the hitching structure (3) or between the said hitching structure (3) and the pivot connection (21) of the body (4) by means of a (respective) cylindrical connection (98; 113).

9. Mower according to Claim 8 and Claim 1, ***characterized in that*** two stands (97) are provided and that the geometric axis (98A) of each cylindrical connection (98) points at least substantially parallel to the direction of transport (79) of the mower (1).

10. Mower according to Claim 9, ***characterized in that*** each stand (97) has two points of contact (103, 105, 106, 107) which extend, viewed from above, respectively on each side of the geometric axis (21A) of the said pivot connection (21) when the body (4) is set down in its transport position (104).

11. Mower according to Claim 9 or 10, ***characterized in that*** the cylindrical connections (98) extend, when the body (4) is in its transport position (104), at least substantially symmetrically on each side of a mid-plane (99) which contains the geometric axis (7A) of the said articulation (7) and which points parallel to the direction of transport (79) of the mower (1).

12. Mower according to Claim 6 and one of Claims 9 to 11, ***characterized in that*** each cylindrical connection (98) is fitted just behind the three hitching points (85, 87) of the hitching structure (3) and in such a way that the extension of their respective geometric axis (98A) at least substantially contains the corresponding lower hitching point (85) of the hitching structure (3) when the body (4) is in its transport position (104).

13. Mower according to Claim 8 and one of Claims 2 to 4, ***characterized in that*** the geometric axis (113A) of the cylindrical connection (113) runs transversely to the direction of work (79) of the mower (108).

14. Mower according to Claim 13 or one of Claims 2 to 4, ***characterized in that*** the body (4) includes a hitching head (19) which is connected on the one hand to the hitching structure (3) by means of the said cylindrical articulation (7) and which is connected on the other hand to the rest of the body (4) using the said pivot connection (21), and that the lock (110) is fitted between the hitching head (19) and the rest of the body (4).

15. Mower according to Claim 14, ***characterized in that*** the lock (110) includes a sleeve (117) articulated to the hitching head (19) and in which a rod (118) articulated to the rest of the body (4) is mounted so that it can slide, and that the sleeve (117) is provided with an opening (119) passing radially through it and intended to receive a lever (120) which serves to limit the pivoting of the rest of the body (4) with respect to the hitching head (19).

16. Mower according to one of Claims 1 to 15, ***characterized in that*** the set-down device (84; 109) is connected to the hitching structure (3).

17. Mower according to one of Claims 1 to 16, ***characterized in that*** it can also be set down in a stable manner when the body (4), viewed from above, lies in its work position (204).

18. Mower according to one of Claims 1 to 17, ***characterized in that*** it can be set down in a stable manner in all the positions into which the body (4) can be pivoted with respect to the hitching structure (3) about the geometric axis (7A).

19. Mower according to one of Claims 1 to 18, ***characterized in that*** the body (4) rests on the ground by means of the said wheel (14) irrespective of the angular position into which it may be pivoted about the geometric axis (7A) by means of an operating member (8).

20. Mower according to one of Claims 1 to 19, ***characterized in that*** it is a disc-mower (33), with or without members (34) for conditioning the cut product.

## Patentansprüche

1. Mähmaschine (1) mit einer Kupplungsvorrichtung (3), die mit der Kupplungseinrichtung (6) eines Motorfahrzeugs (2) starr verbunden werden soll, und einem Körper (4), der in der Nähe eines (4') seiner beiden Längsenden (4', 4'') mittels eines zylindrischen Gelenks (7) mit einer nach oben gerichteten geometrischen Achse (7A) mit der Kupplungsvorrichtung (3) verbunden ist, wobei der Körper (4) bezüglich der Kupplungsvorrichtung (3) aus einer Arbeitsposition (204), in der sich seine Längsachse quer zur Arbeitsrichtung (23) erstreckt, in eine Transportposition (104), in der sich seine Längsachse zumindest im wesentlichen parallel zur Transportrichtung (79) erstreckt, geschwenkt werden kann, wobei der Körper (4) folgendes umfaßt:
- eine Zapfenverbindung (21), die in der Nähe des zylindrischen Gelenks (7) angeordnet ist und eine zumindest im wesentlichen senkrecht zur geometrischen Achse (7A) des zylindrischen Gelenks (7) und zumindest im wesentlichen senkrecht zur Längsachse des Körpers (4) ausgerichtete geometrische Achse (21A) aufweist, und
- ein Rad (14), das in der Nähe des anderen Längsendes (4'') des Körpers (4) angebracht ist und mittels dessen sich der Körper (4) auf den Boden stützt,
***dadurch gekennzeichnet***,
- daß die Mähmaschine (1) eine Abstellvorrichtung (84) aufweist, die entweder mit der Kupplungsvorrichtung (3) oder zwischen der Kupplungsvorrichtung (3) und der Zapfenverbindung (21) des Körpers (4) verbunden ist und beim Abstellen einen Teil des Gewichts der Mähmaschine (1) stützen soll,
- daß sich die Abstellvorrichtung (84) an mindestens zwei Berührungspunkten (103, 105, 106, 107), die sich von oben gesehen auf beiden Seiten der geometrischen Achse (21A) der Zapfenverbindung (21) erstrecken, auf den Boden stützt; und
- daß die Abstellvorrichtung (84) mindestens eine Stütze (97) aufweist, die zwei verschiedene Positionen (197, 297) einnehmen kann: eine Abstellposition (197), in der sie einen Teil des Gewichts der Mähmaschine (1) stützen soll, und eine eingeklappte Position (297), in der sie den Durchlauf des zuvor geschnittenen Gutes unter der Kupplungsvorrichtung (3) nicht behindert.

2. Mähmaschine (108) mit einer Kupplungsvorrichtung (3), die mit der Kupplungseinrichtnng (6) eines Motorfahrzeugs (2) starr verbunden werden soll, und einem Körper (4), der in der Nähe eines (4') seiner beiden Längsenden (4', 4'') mittels eines zylindrischen Gelenks (7) mit einer nach oben gerichteten geometrischen Achse (7A) mit der Kupplungsvorrichtung (3) verbunden ist, wobei der Körper (4) bezüglich der Kupplungsvorrichtung (3) aus einer Arbeitsposition (204), in der sich seine Längsachse quer zur Arbeitsrichtung (23) erstreckt, in eine Transportposition (104), in der sich seine Längsachse zumindest im wesentlichen parallel zur Transportrichtung (79) erstreckt, geschwenkt werden kann, wobei der Körper (4) folgendes umfaßt:
- eine Zapfenverbindung (21), die in der Nähe des zylindrischen Gelenks (7) angeordnet ist und eine zumindest im wesentlichen senkrecht zur geometrischen Achse (7A) des zylindrischen Gelenks (7) und zumindest im wesentlichen senkrecht zur Längsachse des Körpers (4) ausgerichtete geometrische Achse (21A) aufweist, und
- ein Rad (14), das in der Nähe des anderen Längsendes (4'') des Körpers (4) angebracht ist und mittels dessen sich der Körper (4) auf den Boden stützt,
***dadurch gekennzeichnet***,
- daß die Mähmaschine (108) eine Abstellvorrichtung (109) aufweist, die entweder mit der Kupplungsvorrichtung (3) oder zwischen der Kupplungsvorrichtung (3) und der Zapfenverbindung (21) des Körpers (4) verbunden ist und beim Abstellen einen Teil des Gewichts der Mähmaschine (108) stützen soll,
- daß die Mähmaschine (108) des weiteren einen Riegel (110) aufweist, der das Schwenken der Kupplungsvorrichtung (3) bezüglich des Körpers (4) um die geometrische Achse (21A) der Zapfenverbindung (21) verhindert, wenn die Mähmaschine (108) abgestellt ist, und
- daß die Abstellvorrichtung (109) eine Stütze (111) aufweist, die zwei verschiedene Positionen (114, 115) einnehmen kann: eine Abstellposition (114), in der sie einen Teil des Gewichts der Mähmaschine (108) stützen soll, und eine eingeklappte Position (115), in der sie den Durchlauf des zuvor geschnittenen Gutes unter der Kupplungsvorrichtung (3) nicht behindert.

3. Mähmaschine nach Anspruch 2, ***dadurch gekennzeichnet***, daß sie ein einziges Rad (14) aufweist und daß sich die Abstellvorrichtung (109) an mindestens zwei Punkten (121, 122) auf den Boden stützt.

4. Mähmaschine nach Anspruch 3, ***dadurch gekennzeichnet***, daß sich die Berührungspunkte (121, 122), von oben gesehen, vor der geometrischen Achse (21A) der Zapfenverbindung (21) erstrecken.

5. Mähmaschine nach Anspruch 1 oder nach Anspruch 3 oder 4, ***dadurch gekennzeichnet***, daß dich die beiden Berühungspunkte (103, 105, 106, 107; 121, 122) jeweils auf beiden Seiten einer mittleren Ebene (99) erstrecken, die die geometrische Achse (7A) des zylindrischen Gelenks (7) enthält und zumindest im wesentlichen parallel zur Transportrichtung (79) der Mähmaschine (1; 108) ausgerichtet ist.

6. Mähmaschine nach einem der Ansprüche 1 bis 5, ***dadurch gekennzeichnet***, daß die Kupplungsvorrichtung (3) zwei untere Kupplungspunkte (85), die mit den unteren Armen (86) des Motorfahrzeugs (2) verbunden werden sollen, und einen oberen Kupplungspunkt (87), der mit der Kupplungsstange (88) des Motorfahzeugs (2) verbunden werden soll, aufweist.

7. Mähmaschine nach einem der Ansprüche 1 bis 6, ***dadurch gekennzeichnet***, daß die Abstellvorrichtung (84; 109) mindestens ein Positionierglied (101; 116) aufweist, das die Stütze(n) (97; 111) aus ihrer Abstellposition (197; 114) in ihre eingeklappte Position (297; 115) und umgekehrt bringt.

8. Mähmaschine nach einem der Ansprüche 1 bis 7, ***dadurch gekennzeichnet***, daß die Stütze(n) (97; 111) mittels einer (jeweiligen) zylindrischen Verbindung (98; 113) entweder mit der Kupplungsvorrichtung (3) oder zwischen der Kupplungsvorrichtung (3) und der Zapfenverbindung (21) des Körpers (4) verbunden ist (sind).

9. Mähmaschine nach Anspruch 8 und 1, ***dadurch gekennzeichnet***, daß zwei Stützen (97) vorgesehen sind und daß die geometrische Achse (98A) jeder zylindrischen Verbindung (98) zumindest im wesentlichen parallel zur Transportrichtung (79) der Mähmaschine (1) ausgerichtet ist.

10. Mähmaschine nach Anspruch 9, ***dadurch gekennzeichnet***, daß jede Stütze (97) zwei Berührungspunkte (103, 105, 106, 107) aufweist, die sich, von oben gesehen, jeweils auf beiden Seiten der geometrischen Achse (21A) der Zapfenverbindung (21) erstrecken, wenn der Körper (4) in seiner Transportposition (104) abgestellt ist.

11. Mähmaschine nach Anspruch 9 oder 10, ***dadurch gekennzeichnet***, daß sich die zylindrischen Verbindungen (98), wenn sich der Körper (4) in seiner Transportposition (104) befindet, auf eine zumindest im wesentlichen symmetrische Weise auf beiden Seiten einer mittleren Ebene (99) erstrecken, welche die geometrische Achse (7A) des Gelenks (7) enthält und parallel zur Transportrichtung (79) der Mähmaschine (1) ausgerichtet ist.

12. Mähmaschine nach Anspruch 6 und einem der Ansprüche 9 bis 11, ***dadurch gekennzeichnet***, daß jede zylindrische Verbindung (98) knapp hinter den drei Kupplungspunkten (85, 87) der Kupplungsvorrichtung (3) angeordnet ist, und zwar derart, daß die Verlängerung ihrer jeweiligen geometrischen Achse (98A) zumindest im wesentlichen den entsprechenden unteren Kupplungspunkt (85) der Kupplungsvorrichtung (3) enthält, wenn sich der Körper (4) in seiner Transportposition (104) befindet.

13. Mähmaschine nach Anspruch 8 und einem der Ansprüche 2 bis 4, ***dadurch gekennzeichnet***, daß sich die geometrische Achse (113A) der zylindrischen Verbindung (113) quer zur Arbeitsrichtung (79) der Mähmaschine (108) erstreckt.

14. Mähmaschine nach Anspruch 13 oder einem der Ansprüche 2 bis 4, ***dadurch gekennzeichnet***, daß der Körper (4) einen Kupplungskopf (19) aufweist, der einerseits mittels des zylindrischen Gelenks (7) mit der Kupplungsvorrichtmg (3) und andererseits mit Hilfe der Zapfenverbindung (21) mit dem restlichen Teil des Körpers (4) verbunden ist, und daß der Riegel (110) zwischen dem Kupplungskopf (19) und dem restlichen Tei des Körpers (4) angebracht ist.

15. Mähmaschine nach Anspruch 14, ***dadurch gekennzeichnet***, daß der Riegel (110) eine Hülse (117) aufweist, die an dem Kupplungskopf (19) angelenkt ist und in der eine Stange (118) verschiebbar angebracht ist, die an dem restlichen Teil des Körpers (4) angelenkt ist, und daß die Hülse (117) mit einer sie radial durchquerenden Öffnung (119) versehen ist, die einen Griff (120) aufnehmen soll, der zur Begrenzung des Schwenkens des restlichen Teiles des Körpers (4) bezüglich des Kupplungskopfes (19) dient.

16. Mähmaschine nach einem der Ansprüche 1 bis 15, ***dadurch gekennzeichnet***, daß die Abstellvorrichtung (84; 109) mit der Kupplungsvorrichtung (3) verbunden ist.

17. Mähmaschine nach einem der Ansprüche 1 bis 16, ***dadurch gekennzeichnet***, daß sie ebenfalls auf stabile Weise abgestellt werden kann, wenn sich der Körper (4), von oben gesehen, in seiner Arbeitsposition (204) erstreckt.

18. Mähmaschine nach einem der Ansprüche 1 bis 17, ***dadurch gekennzeichnet***, daß sie in allen Positionen, in denen der Körper (4) bezüglich der Kupplungsvorrichtung (3) um die geometrische Achse (7A) geschwenkt werden kann, auf stabile Weise abgestellt werden kann.

19. Mähmaschine nach einem der Ansprüche 1 bis 18, ***dadurch gekennzeichnet***, daß sich der Körper (4) unabhängig von der Winkelposition, in die er mittels eines Betätigungsglieds (8) um die geometrische Achse (7A) geschwenkt werden kann, mittels des Rades (14) auf den Boden stützt.

20. Mähmaschine nach einem der Ansprüche 1 bis 19, ***dadurch gekennzeichnet***, daß es sich dabei um eine Scheibenmähmaschine (33) mit oder ohne Gliedern (34) zur Behandlung des Schnittgutes handelt.
